Europäisches Patentamt

European Patent Office

Office européen des brevets

(19)

(11) **EP 1 341 365 A1**

(12) **EUROPEAN PATENT APPLICATION**

(43) Date of publication:
**03.09.2003 Bulletin 2003/36**

(51) Int Cl.$^7$: **H04M 9/08**

(21) Application number: **03002907.8**

(22) Date of filing: **10.02.2003**

| | |
|---|---|
| (84) Designated Contracting States:<br>**AT BE BG CH CY CZ DE DK EE ES FI FR GB GR**<br>**HU IE IT LI LU MC NL PT SE SI SK TR**<br>Designated Extension States:<br>**AL LT LV MK RO** | (72) Inventors:<br>• **Shahaf, Mark**<br>  **Ashdod, Israel 77642 (IL)**<br>• **Serfaty, Salomon**<br>  **Doar Gaash, Israel 60951 (IL)** |
| (30) Priority: **25.02.2002 GB 0204311** | (74) Representative: **McCormack, Derek James**<br>**Motorola**<br>**European Intellectual Property Operations**<br>**Midpoint**<br>**Alencon Link**<br>**Basingstoke Hampshire RG21 7PL (GB)** |
| (71) Applicant: **MOTOROLA, INC.**<br>**Schaumburg, IL 60196 (US)** | |

(54) **Method and arrangement for processing a speech signal**

(57)      An audio communication unit (100) includes an audio processing function (210) operably coupled to a receiver and an audio input (130), whereby the audio processing function (210) includes an estimation filter (212) to generate substantially a replica of an echo signal (230) received at the audio input (130). The replica of the echo signal (230) is subtracted from the audio signal and echo signal (260) thereby allowing substantially only the user's audio signal (265) to be transmitted to a receiving communication unit. The audio processing function (210) includes a weight function unit (510, 550) that determines a convergence vector for at least one polynomial coefficient of an estimation filter (212) based on the at least one polynomial coefficient and an echo path impulse response, in order to generate the replica of the echo signal (230).

The adaptation of filter polynomial coefficients, based on the coefficient (preferably filter tap value) and a typical impulse response improves the acoustic echo cancellation in noisy environment, by reducing the residual echo transmitted over a communication path.

FIG. 5

**EP 1 341 365 A1**

## Description

### Field of the Invention

This invention relates to acoustic echo cancellation in telecommunication systems, and in particular in noisy wireless cellular telephony systems.

### Background of the Invention

Wireless communication units (often termed subscriber units) are increasingly becoming essential communication tools for people in day-to-day personal and business communications. As new network infrastructures are implemented and competition between wireless carriers increases, digital wireless subscribers are becoming ever more critical of the service and voice quality they receive from network providers. In the field of wireless communication, it is known that a key technology to provide near-wireline voice quality across a wireless carrier's network is echo cancellation.

Subscribers use speech quality as the benchmark for assessing the overall quality of a network. This has led to intensive research into the area of echo cancellation, with the aim of providing solutions that can reduce background noise and remove acoustic echo before any transcoder processing. By employing echo cancellation, the overall efficiency of the perceived audio quality can be enhanced, thereby significantly improving the quality of speech.

Acoustic echo is generated with both analog and digital handsets, with the extent of echo related to the type and quality of communication equipment used. Acoustic echo is produced by poor voice coupling between the earpiece and microphone in handsets and hands-free devices. Further voice degradation is caused as voice-compressing encoding/decoding devices (vocoders) process the voice paths within the handsets and in wireless networks. This results in returned echo signals with highly variable properties. When compounded with inherent digital transmission delays, call quality is greatly diminished.

Acoustic echo is particularly problematic in vehicular-based scenarios. When a subscriber unit is operated inside a vehicle, a listener hears sound from a loudspeaker as intended. However, the microphone also picks up this same sound, both directly and indirectly, after the sound reflects off the roof, windows, seats, etc. of the car. The result of this reflection is the creation of multipath echo and multiple harmonics of echo, which, unless eliminated, are transmitted back to the distal end of the communication. Thus, echoes (sound reflections) are heard by the distal end user. A predominant use of hands-free telephones in the office has also exacerbated the acoustic echo problem.

Acoustic echo cancellation is required in order to provide full duplex, fully interruptible speech. The acoustic echo canceller functions by modeling the speech being passed to the loudspeaker and removing any echoes picked up by the microphone. This type of operation necessitates a much more complex unit than is used in telephony in order to remove the many acoustic (multipath) echoes generated with each syllable of speech.

In modern telephone networks, echo cancellers are typically positioned in the digital circuit of a subscriber unit. The process of cancelling echo involves the following steps:

(i) As the call is set up, the echo canceller employs a digital adaptive filter to set up a model or characterization of the voice signal and echo passing through the echo canceller.
(ii) As a voice path passes back through the cancellation system, the echo canceller compares the signal and the model to cancel dynamically any existing echo. This process removes more than 80 to 90 percent of the echo across the network.
(iii) A non-linear processor then eliminates any remaining residual echo by attenuating the signal below the noise floor.

In echo cancellation, complex algorithmic procedures are used to compute speech models. This involves generating the sum of all reflected echoes of the original speech, and then subtracting this reflected interfering signal from any signal the microphone picks up. The result should be a clean speech signal of the person talking.

The echo canceller, in a process known as adaptation, must continuously learn the format of this echo prediction.

In modern acoustic echo cancellers, any adaptation method is typically based on a stochastic gradient algorithm, generally known as a least mean square (LMS) algorithm. The normalized LMS (NLMS) algorithm, as described in "Adaptive Filter Theory" by S. Haykin, published by Prentice-Hall in 1991, is the most popular algorithm used.

Though the NLMS algorithm is relatively simple and easy to implement, it is not robust enough to reduce echoes in noisy environments. In particular, it is not deemed suitable for vehicular-based communication systems. In order to cope with noise, some variations of the algorithm, such as noise-robust adaptive step-size algorithms, have been developed. However all these algorithms are based on an optimisation of performance using averaging techniques. Thus, they do not obtain an optimum performance when high background noise and near-end speech co-exist in an audio microphone signal with an echo replica of the received signal.

Accordingly, there exists a need in the field of the present invention to provide a method and arrangement for processing speech signals, preferably in a noisy acoustic environment, wherein the abovementioned disadvantages may be alleviated.

## Statement of Invention

In accordance with a first aspect of the present invention, there is provided an audio communication unit, comprising a receiver, for receiving an audio communication signal, including an audio enunciator for enunciating an audio signal. A transmitter, for transmitting an audio signal from the audio communication unit, includes an audio input for receiving a user's audio signal and an echo signal from the receiver. An audio processing function is operably coupled to the receiver and the audio input. The audio processing function includes an estimation filter to generate substantially a replica of the echo signal based on the received signal, and subtracts the replica of the echo signal from the audio signal and echo signal received from the audio input. In this manner, substantially only the user's audio signal is transmitted to a receiving communication unit. In particular, the audio processing function includes a weight function unit that determines a convergence vector for at least one polynomial coefficient (preferably tap value) of the estimation filter based on the at least one polynomial coefficient and an echo path impulse response, in order to generate the replica of the echo signal.

In accordance with a second aspect of the present invention, there is provided a method for processing a speech signal in an audio communication unit. The method comprises the steps of receiving an audio communication signal and processing a user's audio signal that includes an echo audio communication signal. The method further includes the steps of generating substantially a replica of the echo audio communication signal by determining a convergence vector for at least one polynomial coefficient of an estimation filter based on the at least one polynomial coefficient and an echo path impulse response; and subtracting the replica echo signal from the user's audio signal that includes an echo audio communication signal thereby allowing substantially only the user's audio signal to be transmitted to a receiving communication unit.

The adaptation of filter polynomial coefficient(s), based on the coefficient (preferably filter tap value) and a typical impulse response, improves the acoustic echo cancellation in noisy environment by reducing the residual echo transmitted over a communication path. In particular, the adaptation of individual tap values addresses the effect of additive noise on individual filter taps, determined by the inventors to be a variable and undesirable parameter in noisy environments.

Preferably, the weight function unit includes a weight selection function unit operably coupled to a scaling unit, whereby the weight selection function unit analyses the at least one filter polynomial coefficient and derives a scaling factor of the scaling unit to set the at least one filter polynomial coefficient of the estimation filter.

In this manner, a filter convergence vector can be applied to the filter to ensure the replica echo signal converges to a desired signal even in noisy conditions.

Preferably the audio processing function includes an adaptation unit operating a normalised least mean square algorithm that, when employed as above, enables the echo cancellation to be performed in a noisy environment.

Further aspects of the present invention are as claimed in further dependent claims.

## Brief Description of the Drawings

Exemplary embodiments of the present invention will now be described, with reference to the accompanying drawings, in which:

FIG. 1 shows a block diagram of a wireless communication unit adapted to support the various inventive concepts of a preferred embodiment of the present invention;

FIG. 2 illustrates a block diagram of a wireless communication unit's acoustic system in accordance with the preferred embodiment of the present invention;

FIG. 3 illustrates an echo path model of the preferred embodiment of the present invention;

FIG. 4 shows a typical impulse response of the acoustic echo path on implementing the preferred embodiment of the present invention;

FIG. 5 illustrates an echo path model of an alternative embodiment of the present invention;

FIG. 6 shows a typical weight function graph for the subscriber unit adapted in accordance with the preferred embodiment of the present invention;

FIG. 7a and FIG. 7b shows graphs of the residual echo signal of the subscriber unit adapted in accordance with the preferred embodiment of the present invention; and

FIG. 8a and FIG. 8b shows graphs of the residual echo signal of an NLMS algorithm for the subscriber unit adapted in accordance with the preferred embodiment of the present invention.

## Description of Preferred Embodiments

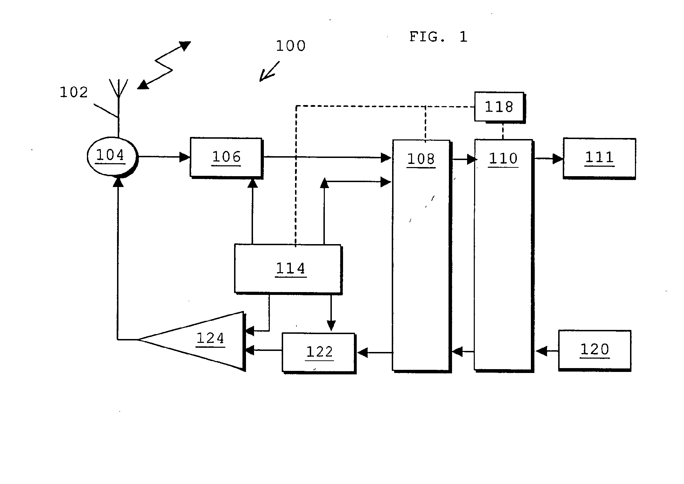

Referring first to FIG. 1, a block diagram of a wireless communication unit 100, adapted to support the inventive concepts of the preferred embodiments of the present invention, is shown. Although the preferred embodiment of the present invention is described with respect to a wireless communication device, for example a cellular phone or radio, a skilled artisan would appreciate that any audio communication device, fixed or wireless, could benefit from the inventive concepts described herein.

The subscriber unit 100 contains an antenna 102 preferably coupled to a duplex filter or circulator 104 that provides isolation between receive and transmit chains within the subscriber unit 100.

The receiver chain includes receiver front-end circuitry 106 (effectively providing reception, filtering and intermediate or base-band frequency conversion). The front-end circuit 106 receives signal transmissions from a transmitting communication unit, such as its associated base transceiver station or a direct communication from any other wireless subscriber unit. The front-end circuit 106 is serially coupled to a signal processing function (processor, generally realised by a DSP) 108. The processing function 108 performs signal demodulation, error correction and formatting. Recovered information from the signal processing function 108 is serially coupled to an audio processing function 110, adapted in accordance with the preferred embodiment of the present invention. The operation of the audio processing function 110 is further described with respect to FIG's 2 to 8.

A timer 118 is operably coupled to the audio processing function 110 to control the timing of audio signal processing.

As known in the art, received signals that have been processed by the audio processing function 110 are formatted in a suitable manner to provide to an output device 111, such as a speaker. In different embodiments of the invention, the signal processing function 108 and audio processing function 110 may be provided within the same physical device. A controller 114 controls the information flow and operational state of, and between, each device.

In accordance with the preferred embodiment of the invention, the wireless subscriber unit 100 is adapted to perform improved echo cancellation, as described in greater detail with regard to FIG's 2 to 8.

As regards the transmit chain, this essentially includes an input device 120, such as a microphone, coupled in series through audio processing function 110, signal processing function 108, transmitter/modulation circuitry 122 and a power amplifier 124. The signal processing function 108, transmitter/modulation circuitry 122 and the power amplifier 124 are operationally responsive to the controller, with an output from the power amplifier coupled to the duplex filter, antenna switch or circulator 104, as known in the art.

The transmit chain in subscriber unit 100, takes the user's audio signal from input device 120 and converts this into information that can be audio processed in audio processor function 110. Notably, the signal entering the input device 120 includes an audio echo signal interfering with the user's audio input signal, and radiated from the output device 111. The processed audio information is then passed to the signal processor where it is encoded for transmission by transmit/modulation circuitry 122 and power amplifier 124.

The audio processing function 110 has been adapted in accordance with the preferred embodiment of the present invention to generate a replica of the echo signal based on the received audio communication signal. The replica signal is then subtracted from the user's audio signal (combined with the echo signal) to leave only the user's signal to be processed and transmitted to the receiving communication unit. Notably, the audio processing function 110 includes a weight function based on the filter tap vector values and typical impulse response properties.

The signal processor function 108 in the transmit chain may be implemented as distinct from the processor in the receive chain. Alternatively, a single processor 108 may be used to implement processing of both transmit and receive signals, as shown in FIG. 1. Of course, the various components within the subscriber unit 100 can be realised in discrete or integrated component form, with an ultimate structure therefore being merely an arbitrary selection.

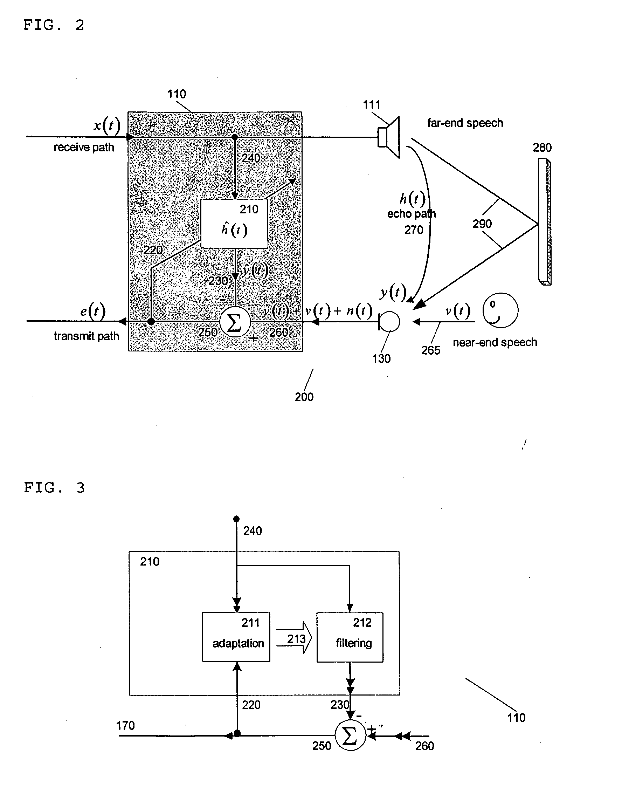

Referring now to FIG. 2, the audio processing function 110, adapted to implement the preferred embodiment of the present invention, is described in greater detail. The audio processing function 110 includes a received signal path for receiving an audio signal x(t) and passing the received audio signal to an audio loudspeaker 111. The audio loudspeaker 111 enunciates 290 the received and processed audio signals.

A microphone device 130 receives audio signals 265 from the wireless communication unit user and forwards the speech signal 260 to the audio processing function 110. A transmit path then forwards the processed audio signal to the transmitter chain of the wireless subscriber unit.

In practice, the audio signal 265 entering the microphone includes interference signals, such as background noise or leakage audio signals enunciated from the loudspeaker 111. The leakage audio (echo) signals may be directly or indirectly reflected 270, 290 from a reflector 280 into the microphone 130, thereby interfering with the audio signal 265 produced by the user.

In a vehicular-based wireless communication environment, where an external loudspeaker and microphone are used, the echo level is exacerbated due to reverberations of audio signals inside the vehicle cabin, constituting further indirect echoes.

An echo cancelling unit 210 is introduced to overcome the echo replications in the transmit path. In particular, the echo cancelling sub-system 210 within the audio processing function 110 synthesizes a replica of any echo signal 230. The echo cancelling unit 210 analyses both the received signal 240 and the transmitted signal 220. The echo-cancelling unit 210 includes an estimation filter that is adapted to have characteristics similar to the acoustic path. The echo-cancelling unit 210 models the echo path and applies the echo replica signal to a signal combiner 250. The signal combiner 250 subtracts the synthesized (replica) echo signal 230 from the audio microphone signals 260, thereby removing the echo signal and leaving the user's audio signal. The implementation of the echo path modelling in echo cancelling unit 210 is preferably based on adaptive filtering methods.

Due to the varying nature of signal characteristics in both the acoustic path 240 and echo reverberations path 270, 290, the filter in the echo cancelling path-modelling unit 210 has to be adapted continuously to reproduce the current echo characteristics. The filter is characterized by a mathematical expression in polynomial form, where the polynomial coefficients are unknown and are continuously derived/updated by the echo-cancelling unit 210.

In the acoustic echo cancellation of the preferred embodiment of the present invention, robustness of the adaptation algorithm to counteract variation of interfering signals is particularly important. This is due to the fact that the filter adaptation in the echo cancellation unit 210 is performed when there is a recognised disturbance of room (or vehicle-cabin) noise when processing near-end user speech 265. Such robustness is essential in mobile hands-free telephones that are frequently used in noisy vehicular-based communication environments. In particular, the inventors of the present invention have determined that the effect of additive noise on individual filter taps varies as the speech signal varies. Thus, the preferred embodiment of the present invention introduces a weight function based on tap vector values to adapt the filter characteristics, as described in greater detail with respect to FIG. 3.

Referring now to FIG. 3, the echo cancelling path-modelling unit 210 of the preferred embodiment of the present invention is described in greater detail. The received signal 240 that is sent to the loudspeaker 111 is input into the adaptation unit 211. Another input into the adaptation unit 211 is a residual error (echo) signal 220 obtained from the transmitted signal 170. The adaptation unit 211 makes an estimate, based on these two signals, of the filter polynomial coefficients to be used. The adaptation unit 211 delivers the filter polynomial coefficients, via path 213, to the filtering unit 212. The filtering unit 212 generates a synthesized echo signal 230 by filtering the received signal 240 using the filter polynomial coefficients. The synthesized echo signal 230 is removed from the microphone signal 260 in the signal combiner 250 to generate the transmitted signal 170.

Referring to adaptation unit 211 on FIG. 3, the preferred criteria of the LMS algorithm is minimization of the mean square error (MSE) between the received signal 240 and the residual echo signal 220 using a gradient or steepest-descend method. The filter 212 is assumed to have Finite Impulse Response (FIR) characteristics. In practice the gradient's value is not known, but it can be estimated iteratively using the input signal according to Equation [1].

$$W(k+1)=W(k)+\mu e(k)X(k) \tag{1}$$

Where:

$W(k)$ is the coefficient's tap vector of the echo path model,
$h(k),\mu$ is the convergence factor that controls the convergence speed, and
$\mathbf{X(k)}$ is the reference signal vector filtered by the path model.

The error (transmit) signal $e(k)$ 220 is calculated as the difference 250 between the microphone audio signal 260 and the synthesized output 230 of the estimated model:

$$e(k) = y(k) + v(k) + n(k) - \hat{y}(k)$$

$$=[H_{opt} - W(k)]X(k) + v(k) + n(k)$$

$$e(k) = y(k) + v(k) + n(k) - \hat{y}(k)$$
$$= \left[ \mathbf{H}_{\mathbf{opt}} - \mathbf{W}(k) \right] \mathbf{X}(k) + v(k) + n(k)$$

[2]

In the LMS algorithm, the correction to the tap vector **W(k)** is directly proportional to the input vector **X(k)**. Consequently, the algorithm may experience a gradient noise amplification problem when **X(k)** is large. To overcome this potential problem, a normalized LMS (NLMS) algorithm is used. The adaptation of the NLMS is given by:

$$W(k+1) = W(k) + \frac{\mu_0}{P_x(k)} e(k) X(k)$$

[3]

Where a time-varying step size is introduced with respect to the Euclidean norm of the input vector **X**(k)

$$P_x(k) = \| X(k) \|^2$$

[4]

Substituting an expression for the error Equation [2] into Equation [3] we obtain:

$$\mathbf{W}(k+1) = \mathbf{W}(k) + \frac{\mu_0}{P_x(k)} \left\{ \left[ \mathbf{H}_{\mathbf{opt}} - \mathbf{W}(k) \right]^T \mathbf{X}(k) \right\} \mathbf{X}(k) + \frac{\mu_0}{P_x(k)} \left[ n(k) + v(k) \right] \mathbf{X}(k)$$

[5]

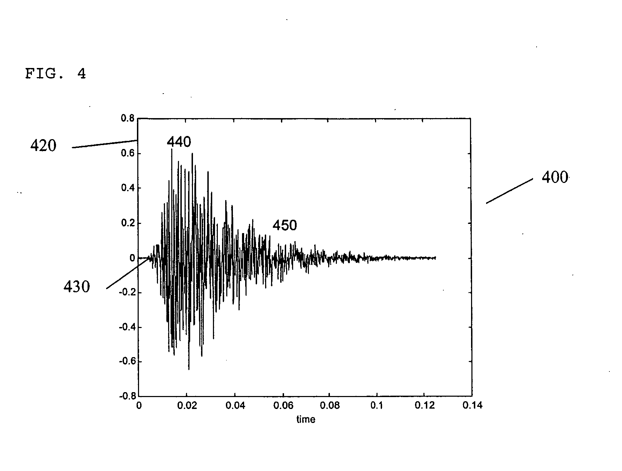

Where: **H_opt** is the optimal echo path.
The normalization by $P_x(k)$ makes the contribution of the error **H_opt-W(k)** to adaptation independent of $P_x(k)$, while the second term in Equation [4] becomes dominant especially for small values of $P_x(k)$, in the presence of additive noise and near-end speech.
Referring to FIG. 2, the influence 240 and 290 of the acoustical environment on the transmission between the loudspeaker and microphone is described by the impulse response $h(t)$, which has a typical form.
Referring now to FIG. 4, a plot of the typical impulse response 400 of the acoustic echo path of the preferred embodiment of the present invention is shown. The impulse response 400 shows normalised amplitude values 420 versus time 410. The impulse response 400 consists of a silent period 430 representing the delay corresponding to the distance between the loud-speaker and microphone. A bundle of high peaks 440 represent the direct coupling between the loudspeaker and the microphone as well as some prime reflections. Subsequently, a large number of peaks 450 decay exponentially in time and represent the secondary reflections against the walls in the room or vehicle cabin. The main conclusion of this type of response is that the effect of the additive noise on each tap is different with respect to the particular tap value.
Hence, observing Equation [4], the inventors of the present invention have applied a convergence factor $\mu(k)$ $=\mu_0/P_x(k)$ to all taps during the adaptation process 211. In the mean sense, assuming certain statistical properties of the signals, we can expect that for $k \rightarrow \infty$ the algorithm will converge. However, it is not necessarily true that this relationship holds in a noisy environment due to large fluctuations of the noise component. This is particularly true for any taps having small numerical values.
Thus, it is proposed to introduce a weight function to the relationship in order to determine a convergence vector $\vec{\mu}$(**W**,k), being a function of the values of the tap vector, their characteristics as well as taking into account the properties of the typical echo path impulse response. This is expressed in Equation [6]

$$\vec{\mu}(W,k) = F_w \{ W, R[W], P(W), k \}$$

[6]

Where:

**W** is the tap vector of the echo path impulse response,
**R[W]** is the characteristic of the tap vector,
**P(W)** is the properties of the typical echo path impulse response, and
t is time.

The modified version of the adaptation expression in Equation [5] is shown by Equation [7]

$$\mathbf{W}(k+1) = \mathbf{W}(k) + \frac{\mu_0}{P_X(k)}\{\mathbf{H}_{opt} - \mathbf{W}(k)\}^T \mathbf{X}(k)\}\mathbf{X}(k) + \frac{\mu(\mathbf{W},k)}{P_X(k)}[n(k) + v(k)]\mathbf{X}(k) \quad [7]$$

In the preferred embodiment of the present invention, the weight function is configured to satisfy the following requirements:

(i) The weight function shall monotonically increase the taps weighting *w(k)* function;
(ii) As the likelihood of the tap vector to the typical response increases, the variance of the convergence vector increases, and vice-versa;
(iii) Tap values of similar order shall have similar values of convergence factor; and
(iv) Due to the exponential decay of the impulse response the function is recommended to explore this feature, i. e. the weight function is proposed to have logarithmic characteristics.

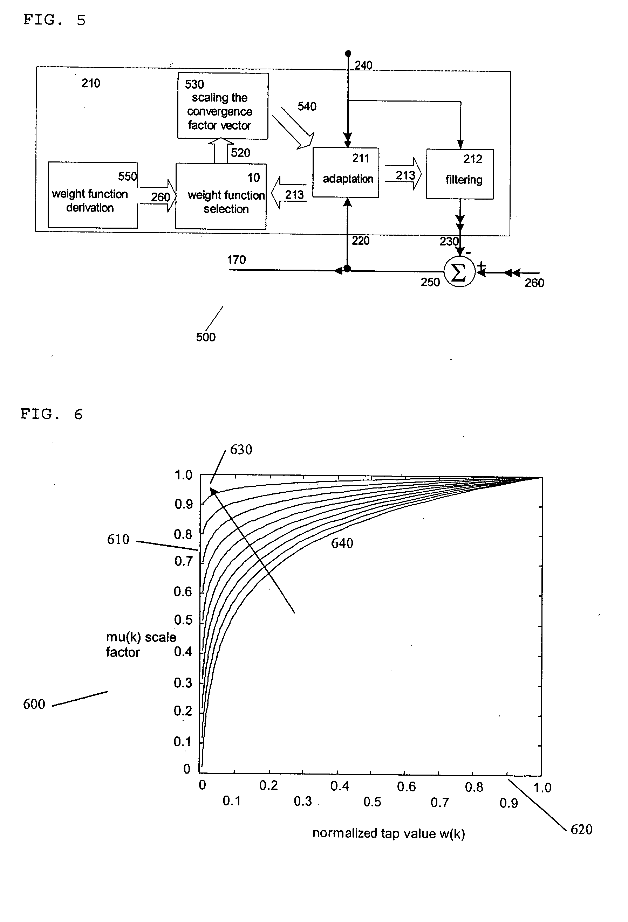

A skilled artisan would recognise that a weight function satisfying one or more of the above conditions would still provide an improvement over known echo cancellation arrangements.
Referring now to FIG. 5, an echo path model of an alternative embodiment of the present invention is shown. The modified echo-cancelling unit 210 includes two additional functional units:

(i) the weight selection function unit 510, and
(ii) scaling unit 430.

In the alternative configuration, the estimated filter coefficients (taps) are delivered 213 to both the filter 212 and the weight selection function unit 510. The weight selection function unit 510 selects an appropriate scaling (weight) function analysing the tap vector characteristics and also derives the appropriate scaling function.
The scaling function is delivered via connection 520 to the scaling unit 530 that will derive the,scaling vector from the convergence factor and scaling function. The resultant scaling vector is delivered via connection 540 to the adaptation unit 211. The adaptation unit 211 has been modified to incorporate properly the convergence vector instead of convergence constant into the adaptation process.
Furthermore, it is envisaged that an additional weight function derivation unit 550 may be introduced. The additional weight function derivation unit 550 also receives the estimated tap vector and with respect to the properties of the estimated acoustic path may derive a different set of weighting functions with an alternative selection rule. The different set of weighting functions are delivered to the selection unit 510 via the connection 260 to, if required, change the operational environment of the unit, for example if the typical response of the echo path has changed.
Referring now to FIG. 6, a series of plots 600 of suitable weight function examples are shown, in relation to normalised tap vector characteristics 620 versus the typical response as a function of scale factor 610. For each of the functions the adaptation parameter per tap shows a scaling value between '0' and '1'. When the scaling factor approaches '0', the adaptation process shows minimal variation, whilst when the scaling factor approaches '1', the adaptation process uses the preprogrammed value of convergence factor.
If the effect of the interfering (echo) signal is significant for low-scale values, the value of the scaling factor 610 is made proportional to the estimated value of the specific tap/filter coefficient. That is, for smaller values, the scaling factor is lower making the adaptation process slower. In contrast, for large tap values the adaptation process is more dynamic.
When the variance between the scaling factor values is a higher value 650 from the series, the effect of the proposed mechanism has greater effect on the overall adaptation process. In contrast, when the variance is lower, the adaptation process resembles the preferred adaptation method.
When the characteristics of the modelled path, as represented by the estimated filter taps, are similar to the typical echo path response, the function 630 that has a higher effect on the adaptation method is selected. In contrast, during initial convergence or when the similarity to the typical response is lower, function 640 is selected.

For example, since the adaptation process starts while default initial conditions are used for the tap vector (typically '0'), the modified adaptation configuration effectively takes place only when a particular similarity of the tap vector to the typical response is obtained. This will reduce the distortion due to the immature values of the tap vector at the beginning of the adaptation process, or during periods when the acoustic path is not properly estimated.

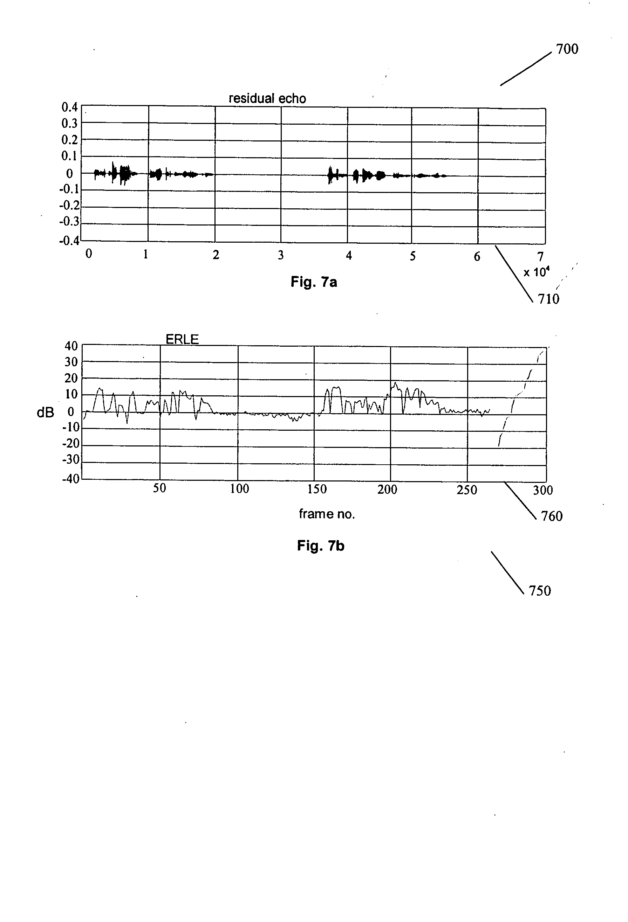

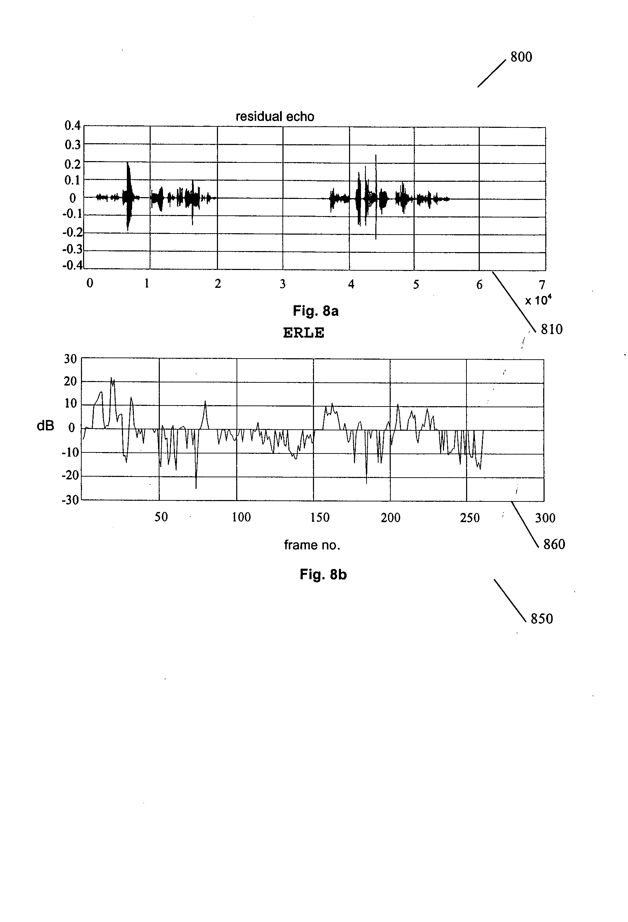

Both the proposed algorithm and the ordinary NLMS algorithm were simulated using the same framework, i. e. the speaker signal was applied to the echo path filter having similar characteristics to that shown in FIG. 4. The resultant echo replica signal was combined with a different speech signal representing the near-end speaker's speech together with additive white Gaussian noise. The total signal was applied as a microphone input. The simulation results in terms of residual echo and Echo Return Loss Enhancement (ERLE) are shown in FIG. 7a and 7b for the proposed scheme and shown in FIG. 8a and 8b for the NLMS algorithm.

Referring now to FIG. 7a, plot 700 shows the residual echo signal in time (frame number) 710 after the processing operation, for the subscriber unit adapted in accordance with the preferred embodiment of the present invention. Plot 800 of FIG. 8a shows the residual echo signal in time 810 after the processing operation, of a NLMS algorithm for the subscriber unit. The Y-axis is the signal value related to the original echo signal that was normalized to have its peak value, i.e. max(abs(signal)) set to unity. Hence, the Y-axis represents the strength of the echo signal.

It can be seen that the signal on plot 700 of FIG. 7a is noticeably weaker than the comparable plot 800 on FIG. 8a. Notably, FIG. 7a illustrates the response after the proposed algorithm was applied, while FIG. 8a illustrates the response when the NLMS algorithm was applied.

Referring now to FIG. 7b, plot 750 shows the ERLE, in accordance with the preferred embodiment of the present invention. As a comparison, FIG. 8b, plot 850 shows the ERLE of after applying the NLMS algorithm. Plot 750 of FIG. 7b and plot 850 of FIG. 8b illustrate the typical (ERLE) measurement in dB used to assess an echo canceller's performance. The ERLE value signifies a ratio between the residual signal and the original signal. The ERLE value represents the amount of attenuation the algorithm is capable to achieve.

It can be seen that on plot 850 of FIG. 8b there are appearances of negative values. This signifies that the echo signal was amplified instead of being attenuated.

It is also noticeable that the values on FIG. 7b are, in general, higher than those on FIG 8b (for comparable frame positive values). This means that the echo attenuation achieved by the proposed method is higher than NLMS.

Generally, the inventive concepts contained herein are equally applicable to any audio communication system. Whilst specific, and preferred, implementations of the present invention are described above, it is clear that one skilled in the art could readily apply variations and modifications of such inventive concepts.

Thus, an apparatus and a method for improving the processing of wireless speech signals, particularly in noisy environments, have been provided, whereby the aforementioned disadvantages with prior art arrangements have been substantially alleviated.

## Claims

1. An audio communication unit (100), comprising:

   a receiver, for receiving an audio communication signal, including an audio enunciator (111) for enunciating an audio signal;
   a transmitter, for transmitting an audio signal from the audio communication unit, including an audio input (130) for receiving a user's audio signal (265) and an echo signal (270, 290) from the receiver; and
   an audio processing function (210) operably coupled to the receiver and the audio input (130), whereby the audio processing function (210) includes an estimation filter (212) operable to generate substantially a replica of the echo signal (230) based on the received signal and subtract the replica of the echo signal (230) from the audio signal and echo signal (260) received from the audio input (130) thereby allowing substantially only the user's audio signal (265) to be transmitted to a receiving communication unit;

   the audio processing function (210) further comprising a weight function unit (510, 550) that determines a convergence vector for at least one polynomial coefficient of the estimation filter (212) based on the at least one polynomial coefficient and an echo path impulse response, in order to generate the replica of the echo signal (230).

2. An audio communication unit according to claim 1 wherein the weight function unit comprises a weight selection function unit (510) operably coupled to a scaling unit (530), whereby the weight selection function unit (510) analyses the at least one filter polynomial coefficient and derives a scaling factor of the scaling unit (530) to set the at least one filter polynomial coefficient of the estimation filter (212).

3. The audio communication unit (100) according to Claim 1 or Claim 2, whereby the at least one filter polynomial coefficient is at least one tap value.

4. The audio communication unit (100) according to Claim 3, wherein the audio processing function (210) includes an adaptation unit (211) operably coupled to the weight selection function unit (510) that employs a normalised least mean square algorithm for use in a noisy environment.

5. The audio communication unit according (100) to Claim 4, wherein a time-varying step size of the input vector **X** (**k**) is introduced to the adaptation unit (211).

6. The audio communication unit (100) according to any preceding Claim, wherein the weight function (510, 550) is configured to satisfy at least one of the following requirements:

   (i) The weight function shall monotonically increase a filter taps weighting **w(k)** function;
   (ii) As a tap vector response approaches a typical impulse response, a variance of a convergence vector increases;
   (iii) Tap values of similar order have a similar value of convergence factor;
   (iv) The weight function employs logarithmic characteristics.

7. A method for processing a speech signal in an audio communication unit, the method comprising the steps of:

   receiving an audio communication signal; and
   processing a user's audio signal (260) that includes an echo audio communication signal (270, 290);
   the method **characterised by** the steps of:

   generating substantially a replica of the echo audio communication signal (230) by determining a convergence vector (420) for at least one polynomial coefficient of an estimation filter (212) based on the at least one polynomial coefficient and an echo path impulse response; and
   subtracting (250) the replica echo signal (230) from the user's audio signal (260) that includes an echo audio communication signal (270, 290) thereby allowing substantially only the user's audio signal to be transmitted to a receiving communication unit.

8. The method for processing a speech signal in an audio communication unit according to Claim 7, the method further **characterised by** the step of:

   deriving a scaling factor (430) to adapt the at least one filter polynomial coefficient, preferably a tap value, of the estimation filter.

9. The method for processing a speech signal in an audio communication unit according to Claim 7 or Claim 8, the method further **characterised by** the step of:

   employing a normalised least mean square algorithm for use in a noisy environment to adapt at least one polynomial coefficient of an estimation filter (212) in order to generate substantially a replica of the echo audio communication signal.

FIG. 1

100

102

FIG. 2

$x(t)$

receive path

110

111

far-end speech

280

240

210

$\hat{h}(t)$

$h(t)$
echo path
270

290

220

230 $\hat{y}(t)$

$e(t)$

transmit path

250 $\Sigma$ + 260

$y(t) + v(t) + n(t)$

$y(t)$

$v(t)$

near-end speech

0

130

265

200

FIG. 3

240

210

211
adaptation

213

212
filtering

220

230

170

250 $\Sigma$ 260

110

FIG. 4

FIG. 5

FIG. 6

residual echo

**Fig. 7a**

700

710

ERLE

dB

frame no.

**Fig. 7b**

760

750

EP 1 341 365 A1

residual echo

800

Fig. 8a

810

ERLE

dB

frame no.

860

Fig. 8b

850

15

**European Patent Office**

## PARTIAL EUROPEAN SEARCH REPORT

which under Rule 45 of the European Patent Convention shall be considered, for the purposes of subsequent proceedings, as the European search report

**Application Number**

EP 03 00 2907

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 349 556 A (MOTOROLA INC) 1 November 2000 (2000-11-01) | 1-3,6-8 | H04M9/08 |
| Y | * abstract * <br> * page 1, line 30 - line 31 * <br> * page 2, line 21 - line 23 * <br> * page 3, line 10 - line 19 * <br> * page 4, line 3 - line 19; figure 1 * <br> * page 5, line 15 - line 30; figure 2 * <br> * page 6, line 9 - page 7, line 4 * <br> --- | 4,9 | |
| Y | FR 2 762 146 A (SYLEA) 16 October 1998 (1998-10-16) * abstract * <br> * page 1, line 10 - line 34 * <br> * page 3, line 13 - line 16 * <br> * page 5, line 14 - line 18 * <br> ----- | 4,9 | |

**TECHNICAL FIELDS SEARCHED (Int.Cl.7)**

H04B
H04M

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 12 June 2003 | Bossen, M |

EPO FORM 1503 03.82 (P04C07)

**European Patent**
**Office**

**INCOMPLETE SEARCH**
**SHEET C**

Application Number

EP 03 00 2907

Claim(s) searched completely:
      1-4, 6-9

Claim(s) not searched:
      5

Reason for the limitation of the search:

The feature time-varying step size of the input vector X(k) in claim 5 is unclear because it is not the input vector that has a step size. Further, the description offers no explanation that could clarify the feature. Therefore, claim 5 lacks clarity to such an extent that it cannot be searched.

## ANNEX TO THE EUROPEAN SEARCH REPORT
## ON EUROPEAN PATENT APPLICATION NO.

EP 03 00 2907

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2003

| Patent document cited in search report | | Publication date | Patent family member(s) | | Publication date |
|---|---|---|---|---|---|
| GB 2349556 | A | 01-11-2000 | US 2002090079 A1 | | 11-07-2002 |
| | | | CN 1267141 A | | 20-09-2000 |
| FR 2762146 | A | 16-10-1998 | FR 2762146 A1 | | 16-10-1998 |
| | | | DE 69802992 D1 | | 31-01-2002 |
| | | | DE 69802992 T2 | | 20-06-2002 |
| | | | EP 0872923 A1 | | 21-10-1998 |
| | | | ES 2168726 T3 | | 16-06-2002 |

EPO FORM P0459

For more details about this annex : see Official Journal of the European Patent Office, No. 12/82